# EUROPÄISCHE PATENTSCHRIFT

(11) **EP 0 478 933 B1**
(45) Veröffentlichungstag und Bekanntmachung des Hinweises auf die Patenterteilung: **24.11.1993**
(21) Anmeldenummer: 91113607.5
(22) Anmeldetag: 14.08.1991
(51) Int. Cl.: B60T 8/40, F04B 49/10

(54) **Hydraulisches System, wie Kraftfahrzeug-Bremsanlage oder dergleichen**
Hydraulic system, such as a vehicle brake system or the like
Système hydraulique, tel qu'un système de freinage de véhicule ou analogue

(30) Priorität: 29.09.1990 DE 4030862
(43) Veröffentlichungstag der Anmeldung: 08.04.1992
(73) Patentinhaber: ROBERT BOSCH GMBH, 70442 Stuttgart (DE)
(72) Erfinder: Klose, Michael, Dipl.-Ing., W-7122 Besigheim 3 (DE); Schäfer, Ernst-Dieter, Dipl.-Ing. (FH), W-7016 Gerlingen (DE); Schumann, Frank, Dipl.-Ing., W-7141 Möglingen (DE); Wetzel, Gerhard, Dipl.-Ing., W-7015 Korntal 1 (DE); Müller, Klaus, Dr.-Ing., W-7146 Tamm (DE)

(56) Entgegenhaltungen:
- EP-A- 0 159 373
- EP-A- 0 264 574
- EP-A- 0 379 957
- DE-A- 2 643 860
- DE-A- 3 133 111
- US-A- 4 520 837
- PATENT ABSTRACTS OF JAPAN, vol. 13, no. 465 (M-882)(3813) 20. Oktober 1989 & JP-A-01 182 153 ( ATSUGI MOTOR PARTS CO. ) 20. Juli 1989

## Beschreibung

Die Erfindung geht aus von einem hydraulischen System nach der Gattung des Hauptanspruchs.

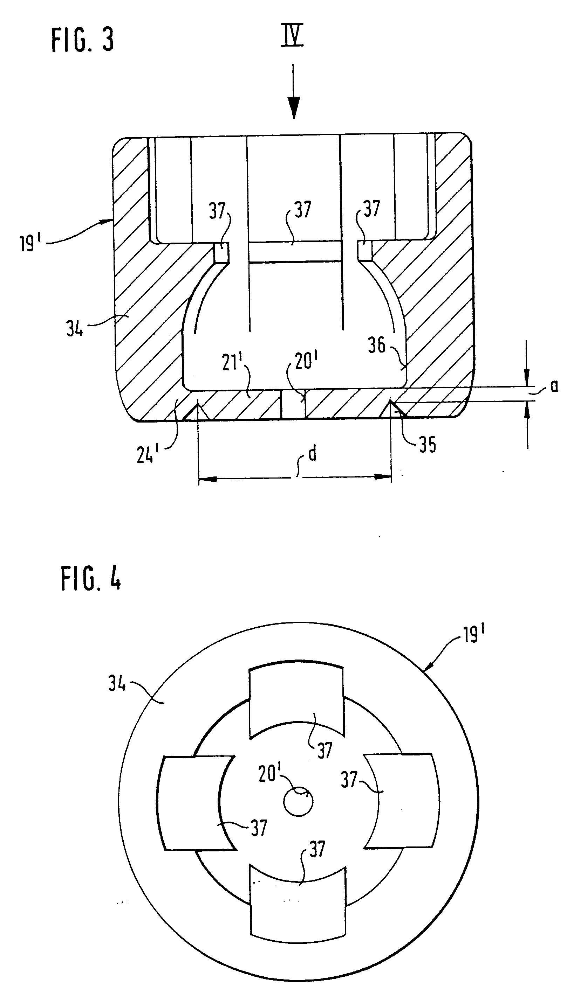

Es ist schon ein derartiges hydraulisches System bekannt (DE-OS 26 43 860, Figur 4), bei dem in einer Kraftfahrzeug-Bremsanlage mit Blockierschutzsystem ein pulsierend schaltbares Magnetventil und ein Pumpenelement für die Druckmittelzufuhr zu einer Radbremse vorgesehen sind. Während eines Blockierschutzregelvorganges sind das Magnetventil und das Pumpenelement eingeschaltet und rufen aufgrund ihrer Funktionsweise Druckschwingungen im angeschlossenen hydraulischen System hervor, die unter anderem zu störender Geräuschentwicklung beitragen. Es sind deshalb stromabwärts des Magnetventils eine Dämpferkammer und ein Drosselkörper angeordnet um diese durch das Schalten des Magnetventils und das pulsierende Fördern des Pumpenelements verursachten Druckschwingungen zu verringern. Für eine ausreichende Wirksamkeit ist es jedoch erforderlich, der Drosselbohrung des Drosselkörpers einen relativ kleinen Querschnitt zu geben, was das hydraulische System jedoch sehr empfindlich gegen Verstopfen der Drosselbohrung durch Fremdkörper macht. Solche Störungen können Ursache für Drücke im hydraulischen System sein, welche ein Bersten des Dämpferkammer-Gehäuses oder Schäden am Druckerzeuger hervorrufen.

Außerdem ist aus EP-A-0 379 957 ein in einer schlupfgeregelten Bremsanlage eines Kraftfahrzeugs verwendbares hydraulisches System mit einer Kolbenpumpe bekannt, der förderstromabwärts eine Dämpferkammer zugeordnet ist. Ausgangsseitig besitzt die als hohlzylindrisches Drehteil ausgebildete Dämpferkammer als Abschluß eine eingepreßte Platte mit einer zentralen Drosselbohrung. Für den Fall einer hydraulischen Überlastung des Systems sind keine besonderen Maßnahmen getroffen.

### Vorteile der Erfindung

Das erfindungsgemäße hydraulische System mit den kennzeichnenden Merkmalen des Hauptanspruchs hat demgegenüber den Vorteil, daß auf einfache Weise eine Überlastung des Systems im Störungsfall vermieden wird, weil ein unzulässiger Druckansteig zum Bersten der Berstscheibe führt, so daß das Druckmittel durch einen ausreichend großen Querschnitt aus der Dämpferkammer abfließen kann. Zwar wird hierdurch die Dämpfungswirkung aufgehoben, jedoch bleibt das hydraulische System weiterhin funktionsfähig. Außerdem wird die geborstene Scheibe aufgefangen und am Eindringen in auf die Dämpferkammer folgende Elemente des Systems gehindert. Eine Kraftfahrzeug-Bremsanlage z.B. behält somit ihre Wirksamkeit; es ist lediglich eine Komfortminderung beim Betrieb des Pumpenelements durch stärker hörbare Betriebsgeräusche hinzunehmen.

Durch die in den Unteransprüchen aufgeführten Maßnahmen sind vorteilhafte Weiterbildungen und Verbesserungen des im Hauptanspruch angegebenen hydraulischen Systems möglich.

Die im Anspruch 2 gekennzeichnete Maßnahme begünstigt die Fertigung des vorzugsweise als spanend bearbeitetes Drehteil ausgebildeten Drosselkörpers, der auf einfache Weise in einem zylindrischen Abschnitt der Dämpferkammer zur Erzielung einer Reibschlußverbindung montierbar ist.

Mit der in Anspruch 3 angegebenen Ausgestaltung der Erfindung werden ebenfalls die Fertigung, insbesondere wenn der Drosselkörper als Fließpreßteil ausgebildet ist, sowie die Montage begünstigt.

Mit der im Anspruch 4 gekennzeichneten Maßnahme wird auf einfache Weise die wirksame Fläche der Berstscheibe begrenzt. Außerdem kann mit der Erzeugung der Kerbe der Abscherquerschnitt der Berstscheibe durch unterschiedliche Kerbtiefe und/oder Kerbdurchmesser variiert werden, um die Berstscheibe an verschiedene Berstdruckanforderungen anzupassen.

Die im Anspruch 5 offenbarte Weiterbildung der Erfindung gibt eine mit geringem Herstellungsaufwand erzielbare Losung zum Zurückhalten einer geborsteten Berstscheibe an.

Mit der im Anspruch 6 angegebenen Maßnahme wird auf einfache Weise einem Verstopfen der Drosselbohrung vorgebeugt.

Die im Anspruch 7 offenbarte Ausgestaltung der Erfindung ist fertigungstechnisch einfach ausführbar. Durch die feste Zuordnung des Fangmittels und/oder des Filtersiebes zum Drosselkörper ist deren Vertauschen (bei getrennter Montage) in der Dämpferkammer ausgeschlossen.

### Zeichnung

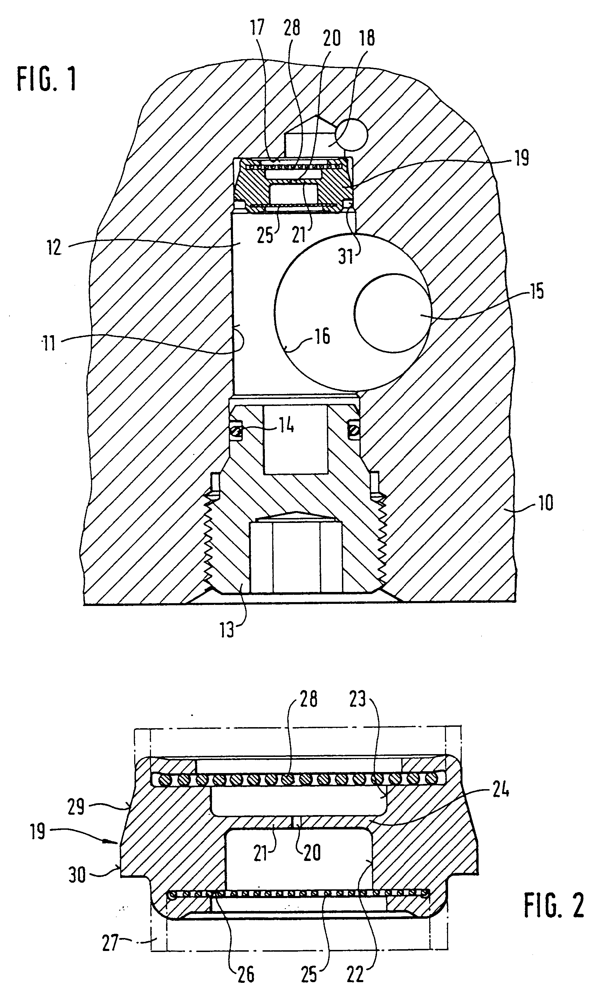

Zwei Ausführungsbeispiele der Erfindung sind in der Zeichnung ver- einfacht dargestellt und in der nachfolgenden Beschreibung näher erläutert. Es zeigen Figur 1 einen Längsschnitt einer Dämpferkammer eines hydraulischen Systems mit einem ein erstes Ausführungsbeispiel bildenden Drosselkörper und Figur 2 den längsgeschnittenen Drosselkörper mit einer Drosselbohrung in einer Berstscheibe sowie beidseitig zu dieser angeordnete Siebe, in anderem Maßstab als in Figur 1, Figur 3 einen Drosselkörper mit Berstscheibe, ebenfalls im Längsschnitt, als zweites Ausführungsbeispiel und Figur 4 eine Ansicht des Drosselkörpers in Richtung des Pfeiles IV in Figur 3 gesehen.

### Beschreibung der Ausführungsbeispiele

Die Zeichnung zeigt in Figur 1 einen Ausschnitt aus einem Gehäuse 10 eines Hydroaggregats einer im übrigen nicht wiedergegebenen, ein hydraulisches System bildenden Kraftfahrzeug-Bremsanlage. In dem Gehäuse 10 ist eine durch eine zylindrische Bohrung 11 gebildete Dämpferkammer 12 angeordnet. Diese ist durch eine Verschlußschraube 13 mit einem eingelegten Dichtungsring 14 nach außen dicht verschlossen. Eingangsseitig ist die Dämpferkammer 12 mit einer schematisch angedeuteten, ein hydraulisches Druckmittel pulsierend fördernden Kolbenpumpe 15 verbunden, deren nicht dargestelltes Pumpenelement in einer die Bohrung 11 schneidenden Aufnahmebohrung 16 montierbar ist. Ausgangsseitig steht die Dämpferkammer 12 mit vom sich rechtwinklig zur Längsachse der Bohrung 11 erstreckenden Bohrungsgrund 17 ausgehenden Bohrung 18 mit nicht dargestellten weiteren Elementen der Kraftfahrzeug-Bremsanlage in Verbindung. Am Ausgang der Dämpferkammer 12 ist ein Drosselkörper 19 mit einer Drosselbohrung 20 und einer Berstscheibe 21 als erstes Ausführungsbeispiel angeordnet.

Der in Figur 2 vergrößert dargestellte Drosselkörper 19 besteht aus Stahl und hat die Form einer rotationssymmetrischen, vorzugsweise als Drehteil gefertigten Buchse. Der Drosselkörper 19 besitzt zwei von seinen beiden Stirnseiten ausgehende Ausdrehungen 22 und 23. Diese sind durch einen, eine Querwand 24 bildenden, dünnwandigen Abschnitt des Drosselkörpers 19 voneinander getrennt. Die Querwand 24 bildet die parallel begrenzte, kreisförmige Berstscheibe 21. In der Mitte der Querwand 24 befindet sich die gleichachsig zur Längsachse des Drosselkörpers 19 verlaufende Drosselbohrung 20, welche einen relativ kleinen Querschnitt hat.

Zuströmseitig ist der Drosselbohrung 20 ein stirnseitig am Drosselkörper 19 aufgenommenes Filtersieb 25 aus einem feinmaschigen Drahtgewebe vorgeordnet. Das Filtersieb 25, welches zum Auffangen von im Druckmittel enthaltenen Fremdkörpern dient, hat eine Maschenweite, welche vorzugsweise kleiner als der Durchmesser der Drosselbohrung 20 ist. Für die Aufnahme des scheibenförmigen Filtersiebes 25 ist der Drosselkörper 19 mit einem stirnseitig von einer die Ausnehmung 22 begrenzenden Stufe 26 axial ausgehenden Bund 27 (strichpunktiert gezeichnet) gefertigt. Nach dem Einlegen des Filtersiebes 25 in den Drosselkörper 19 ist dieser Bund 27 durch Bördeln umgelegt und das Sieb entlang seinem Rand eingefaßt.

Im Bereich seiner anderen Stirnseite besitzt der Drosselkörper 19 ein in gleicher Weise befestigtes, scheibenförmiges Fangsieb 28, welches aus einem Drahtgewebe mit relativ großem Drahtdurchmesser gefertigt ist. Dieses Fangsieb 28 dient zum Zurückhalten der Berstscheibe 21, falls diese durch unzulässig hohen Druckanstieg in der Dämpferkammer 12 geborsten und abgeschert ist. Das abströmseitig der Berstscheibe 21 angeordnete Fangsieb 28 verhindert somit den Weitertransport der geborstenen Scheibe.

Umfangsseitig ist der Drosselkörper 19 mit einer Einführschräge 29 versehen, auf welche eine zylindrische Mantelfläche 30 folgt. Die Einfüllschräge 29 erleichtert das Einführen des Drosselkörpers 19 in die Bohrung 11 der Dämpferkammer 12, während die zylindrische Mantelfläche 30 dazu dient, mit einem nahe dem Grund 17 angeordneten zylindrischen Abschnitt 31 der Bohrung 11 eine Reibschlußverbindung zwischen dem Drosselkörper 19 und dem Gehäuse 10 zu erzielen. Die Einpreßtiefe des Drosselkörpers 19 ist durch Anschlagen am Grund 17 der Bohrung 11 begrenzt.

Der in den Figuren 3 und 4 als zweites Ausführungsbeispiel dargestellte Drosselkörper 19' ist napfförmig ausgebildet. Er besitzt eine hohlzylindrische Mantelwand 34 für die Aufnahme mit Preßsitz im zylindrischen Abschnitt 31 der Bohrung 11 des Hydroaggregat-Gehäuses 10. Bodenseitig, d. h. zuströmseitig, hat der Drosselkörper 19' eine Querwand 24'. Die dünnwandige Querwand 24' bildet eine Berstscheibe 21' mit mittig angeordneter Drosselbohrung 20'. Die Wirkfläche der Berstscheibe 21' ist durch eine mit dem Durchmesser d kreisförmig umlaufende Kerbe 35 in der Querwand 24' bestimmt. Die von der freien Stirnseite der Querwand 24' her in diese eingeprägte Kerbe 35 vermindert die Dicke der Querwand am Rande der Berstscheibe 21' auf eine Restdicke a, durch welche die für den Soll-Berstdruck maßgebliche Abscherquerschnittsfläche der Berstscheibe definiert ist. Formgleich ausgebildete Drosselkörper 19' können daher durch unterschiedliche Prägetiefe der Kerbe auf verschiedene Berstdrücke eingestellt werden. Außerdem kann die Wirkfläche der Berstscheibe 21', welche durch die Spitze der im Querschnitt dreieckförmigen Kerbe 35 bestimmt ist, durch unterschiedliche Durchmesser d verändert werden.

Der Drosselkörper 19' ist vorzugsweise als Fließpreßteil erzeugbar. Er besitzt im Bereich seiner Mantelwand 34 eine innere, kreiszylindrische Umfangsfläche 36, aus der vier radial gerichtete Vorsprünge 37 hervorspringen. Die Vorsprünge 37 sind mit einem nicht dargestellten, kreuzförmigen Prägestempel, welcher von der querwandfernen Seite an der Mantelwand 34 angreift, durch plastische Verformung des Drosselkörpers 19' erzeugt. Die nasenförmig ausgebildeten Vorsprünge 37 verringern den abströmseitigen lichten Querschnitt des Drosselkörpers 19' in einem solchen Maß, daß eine geborstene, d. h. abgescherte Berstscheibe 21' innerhalb des Drosselkörpers zurückgehalten wird.

## Patentansprüche

1. Hydraulisches System, wie Kraftfahrzeug-Bremsanlage oder dergleichen, mit einem pulsierend fördernden Druckerzeuger, insbesondere einer Kolbenpumpe (15), mit einer stromabwarts des Druckerzeugers in einem Gehause (10) angeordneten Dämpferkammer (12), an deren Ausgang (18) ein Drosselkörper (19) mit einer Drosselbohrung (20) in einer dünnwandigen Scheibe aufgenommen ist, dadurch gekennzeichnet, daß die Scheibe des Drosselkörpers (19) als Berstscheibe (21) ausgebildet ist, der abströmseitig ein mit dem Drosselkörper (19) verbundenes Fangmittel (28,37) nachgeordnet ist, wobei nach Bersten der Berstscheibe das Druckmittel durch einen ausreichend großen Querschnitt aus der Dämpferkammer abfließen kann und das System weiterhin funktionsfähig bleibt.

2. Hydraulisches System nach Anspruch 1, mit einem ausgangsseitigen zylindrischen Abschnitt (31) der Dämpferkammer (12), dadurch gekennzeichnet, daß der Drosselkörper (19) die Form einer Buchse hat, welche mit Preßsitz im zylindrischen Abschnitt (31) der Dämpferkammer (12) aufgenommen ist, und daß eine Querwand (24) der Buchse die Berstscheibe (21) bildet.

3. Hydraulisches System nach Anspruch 1, mit einem ausgangsseitigen zylindrischen Abschnitt (31) der Dämpferkammer (12), dadurch gekennzeichnet, daß der Drosselkorper (19') napfformig ausgebildet und mit seiner Mantelwand (34) mit Preßsitz im zylindrischen Abschnitt (31) der Dämpferkammer (12) aufgenommen ist, und daß seine bodenseitige Querwand (24') die Berstscheibe (21') bildet.

4. Hydraulisches System nach Anspruch 2 oder 3, dadurch gekennzeichnet, daß die Wirkflache der Berstscheibe (21') durch eine umlaufende Kerbe (35) in der Querwand (24') bestimmt ist.

5. Hydraulisches System nach Anspruch 2 oder 3, dadurch gekennzeichnet, daß der Drosselkorper (19') abstromseitig der Drosselbohrung (20') in seinem lichten Querschnitt verringert ist, vorzugsweise durch radial innen von der Mantelwand (34) ausgehende, durch plastische Verformung des Drosselkorpers (19') erzeugte Vorsprunge (37).

6. Hydraulisches System nach Anspruch 1, 2 oder 3, dadurch gekennzeichnet, daß der Drosselbohrung (20) zustromseitig ein Filtersieb (25) vorgeordnet ist.

7. Hydraulisches System nach Anspruch 1 oder 6, dadurch gekennzeichnet, daß das Fangmittel (28) und/oder das Filtersieb (25) scheibenförmig ausgebildet und entlang dem Rand stirnseitig in den Drosselkörper (19) eingebördelt sind/ist.

## Claims

1. Hydraulic system, such as a vehicle brake system or the like, having a pressure generator delivering in a pulsating manner, in particular a piston pump (15), having a damping chamber (12) arranged in a housing (10) downstream of the pressure generator, a throttle body (19) with a throttle hole (20) in a thin-walled disc being accommodated at the outlet 18 of the damping chamber (12), characterised in that the disc of the throttle body (19) is configured as a bursting disc (21), on the downstream side of which is arranged an interception means (28, 37) connected to the throttle body (19), it being possible for the pressure medium to drain out of the damping chamber through a sufficiently large cross-section after the bursting of the bursting disc, the system still remaining functional.

2. Hydraulic system according to Claim 1, having an outlet-end cylindrical section (31) of the damping chamber (12), characterised in that the throttle body (19) has the form of a bush which is accommodated with a press fit in the cylindrical section (31) of the damping chamber (12), and in that a transverse wall (24) of the bush forms the bursting disc (21).

3. Hydraulic system according to Claim 1, having an outlet-end cylindrical section (31) of the damping chamber (12), characterised in that the throttle body (19') is configured cup-shaped and its outer wall (34) is accommodated with a press fit in the cylindrical section (31) of the damping chamber (12), and in that its transverse wall (24'), which is at the bottom, forms the bursting disc (21')

4. Hydraulic system according to Claim 2 or 3, characterised in that the effective area of the bursting disc (21') is determined by a peripheral notch (35) in the transverse wall (24').

5. Hydraulic system according to Claim 2 or 3, characterised in that the clear cross-section of the throttle body (19') is reduced downstream of the throttle hole (20'), preferably by radially inward protrusions (37) generated by plastic deformation of the throttle body (19') and starting from the outer wall (34).

6. Hydraulic system according to Claim 1, 2 or 3, characterised in that a filter screen (25) is arranged at the inlet end before the throttle hole (20).

7. Hydraulic system according to Claim 1 or 6, characterised in that the interception means (28) and/or the filter screen (25) is/are configured disc-shaped and is/are beaded into the end of the throttle body (19) along the edge.

## Revendications

1. Système hydraulique, tel qu'une installation de freinage de véhicule à moteur ou analogue, avec un générateur de pression refoulant par pulsations, en particulier une pompe à piston (15), avec une chambre d'amortissement (12) disposée en aval du générateur de pression dans un carter (10), à la sortie (18) duquel est reçu un corps d'étranglement (19) avec un alésage d'étranglement (20) dans un disque à paroi mince, système hydraulique caractérisé en ce que le disque du corps d'étranglement (19) est constitué comme un disque d'éclatement (21), en aval duquel est placé un moyen de retenue (28, 37) relié au corps d'étranglement (19), l'agent sous pression, après éclatement du disque, pouvant s'écouler à travers une section transversale suffisamment grande à partir de la chambre d'amortissement et le système demeurant sans problème en mesure de fonctionner.

2. Système hydraulique selon la revendication 1, avec une section cylindrique (31), située du côté sortie, de la chambre d'amortissement (12), caractérisé en ce que le corps d'étranglement (19) a la forme d'une fourrure, qui est reçue par enfoncement à la presse dans la section cylindrique (31) de la chambre d'amortissement (12) et en ce qu'une paroi transversale (24) de la fourrure forme le disque d'éclatement (21).

3. Système hydraulique selon la revendication 1, avec une section cylindrique du côté sortie (31) de la chambre d'amortissement (12), caractérisé en ce que le corps d'étranglement (19') est constitué en forme de cuvette et est reçu par son enveloppe (34) enfoncée à la presse dans la section cylindrique (31) de la chambre d'amortissement (12) et en ce que sa paroi transversale située du côté du fond (24') forme le disque d'éclatement.

4. Système hydraulique selon la revendication 2 ou 3, caractérisé en ce que la surface active du disque d'éclatement (21') est déterminée par une entaille circulaire (35) dans la paroi transversale (24').

5. Système hydraulique selon la revendication 2 ou 3, caractérisé en ce que le corps d'étranglement (19') du côté aval de l'alésage d'étranglement (20') a une section transversale libre réduite de préférence du fait de saillies (37) partant radialement, intérieurement de la paroi de l'enveloppe (34), obtenues par déformation plastique du corps d'étranglement (19').

6. Système hydraulique selon la revendication 1, 2 ou 3, caractérisé en ce qu'en amont de l'alésage d'étranglement (20) est disposé du côté arrivée un tamls de filtrage (25).

7. Système hydraulique selon la revendication 1 ou 6, caractérisé en de que le moyen de retenue (28) et/ou le tamis de filtrage (25) sont/est constitué en forme de disque et est serti le long du bord du côté frontal dans le corps d'étranglement (19).
